Europäisches Patentamt

European Patent Office

Office européen des brevets

(19)

(11) **EP 0 746 406 B1**

(12) **FASCICULE DE BREVET EUROPEEN**

(45) Date de publication et mention
de la délivrance du brevet:
**16.08.2001 Bulletin 2001/33**

(21) Numéro de dépôt: **95941128.1**

(22) Date de dépôt: **22.11.1995**

(51) Int Cl.$^7$: **B01D 67/00**, G03C 5/31

(86) Numéro de dépôt international:
**PCT/FR95/01541**

(87) Numéro de publication internationale:
**WO 96/15847 (30.05.1996 Gazette 1996/25)**

(54) **PROCEDE POUR MODIFIER EN SURFACE UNE MEMBRANE POLYMERE, MEMBRANE AINSI MODIFIEE**

VERFAHREN ZUR OBERFLÄCHENMODIFIZIERUNG EINER POLYMERMEMBRAN UND SO MODIFIZIERTE MEMBRAN

METHOD FOR SURFACE-MODIFYING A POLYMERIC MEMBRANE, AND RESULTING MEMBRANE

(84) Etats contractants désignés:
**DE FR GB**

(30) Priorité: **23.11.1994 FR 9414309**

(43) Date de publication de la demande:
**11.12.1996 Bulletin 1996/50**

(73) Titulaires:
• **KODAK-PATHE**
**F-75594 Paris Cedex 12 (FR)**
Etats contractants désignés:
**FR**
• **EASTMAN KODAK COMPANY**
**Rochester, New York 14650-2201 (US)**
Etats contractants désignés:
**DE GB**

(72) Inventeurs:
• **MARTIN, Didier, Jean, Kodak-Pathé**
**F-71102 Chalon-sur-Saône Cédex (FR)**
• **PONCELET, Olivier, Jean, Christian,**
**Kodak-Pathé**
**F-71102 Chalon-sur-Saône Cédex (FR)**
• **RIGOLA, Jeannine, Kodak-Pathé**
**F-71102 Chalon-sur-Saône Cédex (FR)**

(74) Mandataire: **Parent, Yves et al**
**KODAK INDUSTRIE,**
**Département Brevets,**
**CRT - Zone Industrielle**
**71102 Chalon-sur-Saône Cedex (FR)**

(56) Documents cités:
**FR-A- 2 373 813          US-A- 4 780 211**

EP 0 746 406 B1

**Description**

La présente invention concerne un procédé pour modifier la surface d'une membrane et les membranes susceptibles d'être obtenues par ce procédé. Le procédé selon l'invention permet de modifier en surface une membrane organique ou inorganique poreuse, afin de contrôler le volume de liquide transporté et la diffusion des espèces au travers de la membrane. Les membranes ainsi modifiées sont utiles pour la régénération de solutions photographiques, en particulier de révélateurs noir et blanc, ou pour la séparation des composés organiques des effluents aqueux.

Les membranes sont très utilisées dans les techniques de séparation. Le transport des fluides au travers des membranes se produit par différents mécanismes qui dépendent de la structure et de la nature de la membrane. Les membranes les plus courantes sont formées à partir de polymères organiques synthétiques ou naturels. Les membranes poreuses contiennent des vides importants par rapport à la dimension des molécules transportées. Dans ces membranes, les pores sont interconnectés et les matières solides représentent seulement un faible pourcentage du volume total de la membrane. Les membranes poreuses du commerce ont une dimension de pores entre 0,005 µm et 20 µm. Elles sont faites d'une grande variété de polymères pour obtenir une gamme importante de rigidités et de résistances mécaniques. Généralement pour la séparation en phase aqueuse, on utilise soit des membranes hydrophiles soit des membranes hydrophobes en fonction des conditions expérimentales (pH, milieu oxydant) mais aussi en fonction du type de molécules à séparer. Ainsi les molécules de type hydrophobe auront tendance à s'adsorber davantage sur un support hydrophobe. Pour éviter l'adsorption de ces molécules, le support hydrophobe peut être modifié en surface par l'incorporation de groupement hydrophile ou par un fin dépôt de surface d'un polymère hydrophile.

Pour les technologies sous pression (microfiltration, ultrafiltration, nanofiltration, osmose inverse), les polymères de type hydrophile sont bien adaptés car il permettront d'avoir des flux importants. C'est le cas de la cellulose et de ses dérivés qui ont été très longtemps utilisés en osmose inverse (haut flux, bonne sélectivité de séparation, faible coût). Cependant les membranes poreuses de type hydrophile sont très sensibles au phénomène de gonflement lorsqu'elles sont en contact avec une solution aqueuse (ce comportement pouvant en plus être amplifié en fonction du pH). De plus, ces matériaux hydrophiles présentent une faible stabilité en présence de certains solvants organiques polaires, d'acides ou de bases ainsi que d'oxydants (chlore, hypochlorite). Ces matériaux sont aussi extrêmement sensibles à la croissance bactérienne et d'autant plus qu'on ne peut leur faire subir des traitements base+oxydant ou acide+oxydant vu leur faible résistance à ces agents chimiques. Pour ces matériaux, le contrôle de la balance hydrophile/hydrophobe permet d'accroître la stabilité chimique du support en fonction du pH et des différents réactifs précédemment cités. Elle augmente aussi la résistance de ces matériaux aux contraintes mécaniques de pression d'utilisation.

Pour les systèmes de type dialyse, en général il s'agit de séparer des macromolécules et des espèces minérales (sels) ou des molécules de faible poids moléculaire. Dans ce cas, les matériaux hydrophiles de type cellulose et dérivés de la cellulose sont très bien adaptés aux traitements de tels milieux (forte proportion d'eau). Les forces osmotiques constituent l'élément "moteur" de ce processus de séparation. Dans ce cas précis, on utilisera la modification de la balance hydrophilie/hydrophobie pour accroître la stabilité de la membrane aux conditions expérimentales (pH, présence de solvants organiques...). En général dans le cas de la dialyse, on n'essaie pas de contrôler le flux d'eau ; la solution de départ se dilue et les molécules de faible taille sont transportées au travers de la membrane. Si on désire concentrer la solution, on utilise en complément de la dialyse une autre technologie comme l'ultrafiltration. Par contre, dans le cas de la régénération des bains photographiques, le contrôle des flux d'eau est un paramètre important car on ne souhaite pas diluer la solution à traiter.

Il existe d'autres matériaux polymères asymétriques obtenus à partir de mélanges de monomères. Leur fonctionnement est décrit par exemple dans le chapitre I intitulé "Physical Chemistry of Membranes", page 19 de <u>Membrane Science and Technology,</u> édité par Y. Osada, T. Nakagawa. "Le domaine hydrophobe domine sur un côté de la membrane, en contact avec le substrat hydrophobe, alors que le domaine hydrophile domine de l'autre côté de la membrane. On observe un effet de renversement du flux pour les membranes asymétriques quand le coefficient de diffusion au travers d'une membrane hydrophile devient très dépendant de la concentration. On obtient un coefficient de perméabilité élevé quand le constituant hydrophile pénètre au travers la membrane du côté du domaine hydrophile de la membrane asymétrique. D'autre part, le coefficient de perméabilité est bas quand le constituant hydrophile pénètre au travers la membrane du côté du domaine hydrophobe."

Les membranes poreuses hydrophobes sont très résistantes aux produits chimiques et ne gonflent pas dans l'eau. Par contre, elles fonctionnent uniquement sous pression et même dans ces conditions ne laissent pas suffisamment passer l'eau. On doit donc traiter ces membranes pour que leurs pores présentent une surface hydrophile. De nombreuse méthodes connues pour rendre hydrophile la surface de membranes hydrophobes sont décrites dans <u>"Synthetic Polymeric Membranes A structural Perspective</u>"; Second Edition, by Robert E. Kesting, publié par Wiley-Interscience (New York, 1985).

Par exemple, le brevet US 5 098 569 décrit un support membranaire modifié en surface dans lequel une couche monomoléculaire d'un polymère hydrophile dérivé de la cellulose est greffée sur une membrane hydrophobe poreuse. La membrane obtenue est stable dans l'éthanol.

Les membranes de polyacrylonitrile sont naturellement plutôt hydrophobes mais ne sont pas lipophobes. Pour certaines applications spécifiques, il faut augmenter leur lipophobie pour éviter le colmatage par les composés organiques. Elles sont neutres électrostatiquement et possèdent une résistance physique aux alcalis plus élevée que la cellulose et ses dérivés. Il existe dans le commerce des membranes de polyacrylonitrile fonctionnalisé qui sont utilisées pour le recyclage des bains de peinture, la purification et la concentration de protéines animales ou végétales et la purification de vaccins et d'anticorps. L'utilisation de ces membranes sous pression permet de compenser les forces de pression osmotique, mais si on les utilise dans un processus du type dialyse, on observe un phénomène d'osmose avec passage de la phase diluée dans la phase concentrée, la taille des pores étant le seul facteur de sélection dans le cas précis de la dialyse.(Dans le cas habituel où elles sont utilisées avec un gradient de pression en ultrafiltration, les effets électrostatiques liés à la charge de surface sont aussi très importants).

Il est aussi connu de modifier la surface d'une membrane présentant un caractère hydrophile. Par exemple, le brevet DD 296220 décrit un procédé pour modifier en surface des membranes de cellulose en faisant réagir une membrane de cellulose avec un halogénure d'acide carboxylique en solution dans un solvant polaire aprotique, dans un milieu catalysé par une base. La fonction halogénée est ensuite partiellement sulfonée avec du bisulfite, puis la membrane est rincée. Ces membranes sont utilisées en dialyse et sont compatibles avec le sang.

Le brevet DD 278495 décrit un procédé pour obtenir une membrane d'hémodialyse en modifiant la surface d'une membrane de cellulose régénérée modifiée par traitement avec un polyisocyanate. Les membranes ainsi modifiées sont utilisables en hémodialyse, hémofiltration ou diafiltration. Ces membranes, comme celles du brevet DD 296220, ne sont pas destinées à la séparation de composés organiques et de sels en milieux aqueux.

La régénération des bains photographiques se fait en général avec des résines échangeuses d'ions dans le cas de révélateurs de type chromogène ou par électrodialyse. Dans le cas des révélateurs noir et blanc, on souhaite maintenir constante l'activité du bain, par exemple en éliminant en continu sélectivement les ions bromure d'un bain de révélateur. Aucune technique connue ne permet de séparer les halogénures des composés organiques, tels que l'hydroquinone et ses dérivés. Jusqu'ici on ne pouvait pas utiliser la dialyse pour la régénération des bains noir et blanc parce que les membranes connues ne permettaient de contrôler le flux d'eau en évitant la dilution du bain.

Le procédé selon la présente invention permet de modifier les caractéristiques de transfert d'une membrane organique ou inorganique poreuse, c'est-à-dire de réduire le flux de liquide transporté, et de contrôler la diffusion des espèces en solution au travers de la membrane, ce qui améliore le rendement de la séparation.

Le procédé selon l'invention comprend les étapes suivantes :

a) on forme sur ladite membrane au moins une couche obtenue en appliquant au moins une solution homogène obtenue en mélangeant un ou plusieurs fluoroalcoxydes de terres rares ou d'alcalino-terreux dans un solvant organique anhydre à température ambiante et en atmosphère inerte, le ou les fluoroalcoxydes étant obtenus par alcoolyse d'un alcoxyde de terre rare ou de métal alcalino-terreux avec un fluoroalcool ayant au moins 3 et au plus 10 atomes de fluor et un rapport fluor/carbone d'au moins 1,5 et d'au plus 2,5.
b) on effectue l'hydrolyse du ou des fluoroalcoxydes en mettant en contact la couche formée en a) avec une quantité d'eau au moins égale à la quantité stoechiométrique nécessaire pour hydrolyser les fluoroalcoxydes, et au plus égale à 5 fois cette quantité stoechiométrique et,
c) on rince la membrane à l'eau pour éliminer les sels solubles formés.

Un autre objet de l'invention est l'utilisation de ces membranes pour la régénération des solutions photographiques, en particulier des révélateurs noir et blanc, et la séparation des composants organiques des effluents aqueux.

Le procédé selon la présente invention permet de modifier sélectivement, en augmentant son caractère hydrophobe et/ou lipophobe, soit uniquement la surface des pores à l'intérieur de la membrane, soit la surface totale d'une membrane poreuse (c'est-à-dire l'ensemble des surfaces externes de la membrane et de la surface des pores qui sont répartis à l'intérieur de la membrane). Comme on le verra dans les exemples, le type de modification engendrée sera fonction :

1) du matériau polymère de la membrane. (La cellulose hydrophile possédant des groupements hydroxyle libres permet une plus forte réactivité des fluoroalcoxydes alors qu'un matériau de "type hydrophobe" aura une réactivité moindre avec les fluoroalcoxydes.)
2) du métal alcalino-terreux (ou de la terre rare) associé au fluoroalcoxyde,
3) du radical alcoxo. Les facteurs prépondérants sont la longueur de la chaîne carbonée, le caractère ramifié ou linéaire de la chaîne et le nombre d'atomes de fluor.

Dans la description qui suit, il sera fait référence aux dessins dans lesquels :

Figure 1 qui représente un montage utilisé pour la régénération des bains photographiques,
Figure 2 qui représente une vue schématique en coupe d'une membrane de cellulose, et
Figure 3 qui représente une vue schématique en coupe d'une membrane de polyacrylonitrile.

Dans l'étape a) les alcalino-terreux sont choisis parmi les éléments du groupe IIA, tels que le béryllium, le magnésium, le calcium, le strontium, le baryum ou le radium et les terres rares sont choisies parmi les éléments du groupe IIIB, tels que le scandium, l'yttrium, le lanthane, le cérium, le gadolinium, d'erbium ou l'ytterbium. Les fluoroalcoxydes préférés sont les fluoroalcoxydes de baryum, de calcium et de strontium.

Les fluoroalcoxydes de terres rares ou d'alcalino-terreux de départ peuvent être obtenus par l'une quelconque des méthodes connues de la technique. En général, ils sont obtenus à partir du ou des alcoxydes d'alcalino-terreux ou de terres rares correspondants.

La préparation des alcoxydes d'alcalino-terreux peut être effectuée par différentes synthèses connues de la technique. Une synthèse facile à mettre en oeuvre consiste à faire réagir directement un alcool sur un alcalino-terreux. Le rendement d'une telle synthèse dépend en particulier de l'encombrement stérique de l'alcool utilisé. La synthèse des alcoxydes d'alcalino-terreux sera d'autant plus rapide que l'encombrement stérique de l'alcool sera faible. De préférence, l'alcool est choisi parmi le méthanol, l'éthanol ou le propanol.

Les alcoxydes de terres rares peuvent être synthétisés soit en faisant réagir un chlorure de terre rare avec un alcoxyde de métal alcalin, soit en faisant réagir directement la terre rare avec un alcool comme le propanol-2, ou un alcool fonctionnalisé comme le méthoxy-2 éthanol ou l'éther monométhylénique de l'éthylène glycol.

Les fluoroalcoxydes de terres rares ou d'alcalino-terreux utilisés dans la présente invention peuvent être obtenus soit par alcoolyse des alcoxydes de terres rares ou d'alcalino-terreux par un alcool fluoré ou perfluoré appelé par la suite "fluoroalcool", soit en faisant réagir directement l'alcalino-terreux en solution dans un solvant polaire avec le fluoroalcool. De préférence ils sont obtenus par alcoolyse des alcoxydes de baryum, de strontium et de calcium avec les fluoroalcools.

Les fluoroalcools sont des alcools hydrogénés à chaîne plus ou moins longue droite ou ramifiée. Les fluoroalcools utiles dans la présente invention ont au moins 3 et au plus 10 atomes de fluor et un rapport fluor/carbone d'au moins 1,5 et au plus 2,5. Les fluoroalcools préférés ont un nombre d'atomes de fluor compris entre 3 et 10 et un nombre d'atomes de carbone compris entre 2 et 5 et sont par exemple choisis parmi le perfluorotertiobutanol, le trifluoro-2,2,2 éthanol, l'hexafluoro-1,1,1,3,3,3 propanol-2, l'hexafluoro-2,2,3,4,4,4 butanol-1, l'heptafluoro-1,1,1,2,2,3,3 butanol-4 ou l'octafluoro-2,2,3,3,4,4,5,5 pentanol-1.

Dans l'étape a) du procédé de la présente invention, on applique sur le support poreux formant la membrane une solution contenant le ou les fluoroalcoxydes dans un solvant organique anhydre miscible dans l'eau, en atmosphère inerte et à température ambiante. Les solvants préférés sont le tétrahydrofuranne, les alcools ou les cétones. La quantité de matières solides dans la solution contenant le fluoroalcoxyde est comprise entre 0,1 et 100 g/l.

Les supports poreux qui peuvent être utilisés dans le cadre de la présente invention peuvent être des membranes minérales ou des membranes polymères organiques, telles que décrites dans Osmose inverse et ultrafiltration, Chapitre II intitulé Technologie et applications, par Alain Maurel, dans Techniques de l'ingénieur J2796 pages 4 à 13.

Les membranes minérales sont choisies parmi les membranes en silice, alumine, zircone ou oxyde de titane ou en mélanges de ces oxydes ou bien en carbone éventuellement recouvert d'une fine couche d'oxyde.

Les membranes polymères organiques sont par exemple des membranes de cellulose ou de dérivés de cellulose, de préférence de cellulose régénérée, ou bien des membranes de polyacrylonitrile, de polysulfone, de polyéthersulfone ou de polymères fluorocarbonés. Les membranes organiques préférées ont des groupes réactifs en surface, par exemple des groupes hydroxyles comme dans les supports cellulosiques.

Les membranes organiques ou minérales peuvent comporter des groupements fonctionnalisés permettant d'avoir une charge de surface positive (par exemple, en introduisant des groupes ammonium ou phosphonium), ou d'avoir une charge de surface négative (par exemple, en introduisant des groupes sulfo, carboxy, etc.).

Les membranes peuvent se présenter sous la forme de modules plans, spiralés ou tubulaires ou sous la forme de modules fibres creuses.

On peut appliquer la solution de fluoroalcoxydes sur la surface de la membrane par toute méthode connue pour appliquer du sol-gel, par exemple en utilisant une barre de couchage, une lame d'air, un cylindre report ou par trempage, par couchage à la tournette, au ménisque, au rideau ou par pulvérisation ou bien en faisant circuler le fluoroalcoxyde métallique dans le réacteur contenant la membrane dans des conditions appropriées.

On a constaté que si la membrane est humidifiée préalablement à l'étape a), les performances d'extraction et de séparation de la membrane sont améliorées. L'humidification de la membrane permet un nettoyage et une activation de la surface de la membrane, et facilite la réaction d'hydrolyse. L'humidification est obtenue par trempage dans une solution d'eau et d'alcool ou en plaçant la membrane en atmosphère saturée de vapeur d'eau.

Dans l'étape b) la quantité d'eau pour hydrolyser les fluoroalcoxydes doit être au moins égale à la quantité stoechiométrique et inférieure à 5 fois, de préférence inférieure à 2 fois cette quantité stoechiométrique. On opère en général à l'humidité de l'air. On peut combiner cette hydrolyse à tout autre méthode complémentaire connue qui n'altère pas le support organique, telle que placer la membrane dans une étuve sous humidité contrôlée.

Après l'hydrolyse, on laisse le solvant s'évaporer et on obtient une couche hydrophobe à base d'alcalino-terreux (ou de terre rare).

On peut faire varier l'épaisseur de la couche obtenue soit en faisant varier la concentration initiale en fluoroalcoxydes métalliques, soit en répétant plusieurs fois la séquence a)-b) et en laissant le support poreux à l'air libre pendant quelques minutes entre chaque dépôt. On peut aussi réaliser de la même manière successivement plusieurs couches avec des fluoroalcoxydes différant par la nature du radical alcoxo ou par la nature du métal alcalino-terreux (ou de la terre rare).

A l'étape c) la membrane est rincée à l'eau. Cette étape permet d'éliminer les sels métalliques solubles dans l'eau qui pourraient être gênants lorsqu'on utilise la membrane pour traiter certaines solutions, comme les solutions photographiques.

EXEMPLES A-H

Ces exemples concernent la préparation des fluoroalcoxydes utilisés dans la présente invention.

**Exemple A - Synthèse du fluoroalcoxyde de baryum Ba6R**

On met en solution sous argon 13,6 g (0,0099 mol) de baryum dans 200 ml d'éthanol anhydre. La réaction est exothermique avec dégagement d'hydrogène. Le milieu réactionnel est filtré pour éliminer les colloïdes résiduels. Le filtrat est concentré sous 1.33 Pa ($10^{-2}$ mm Hg) et séché 12 h pour donner une poudre blanche pulvérulente dont l'analyse élémentaire montre qu'elle contient environ 60% en masse de baryum.

On introduit sous argon 22,5 g de cette poudre dans 300 ml de tétrahydrofuranne (THF) anhydre, puis on ajoute goutte à goutte 21 ml d'hexafluoro-2-propanol à température ambiante.

On laisse réagir le mélange pendant 2 heures sous agitation (réaction très exothermique). Le produit est purifié par cristallisation dans le tétrahydrofuranne anhydre. On recueille 42 g de poudre blanche dont l'analyse élémentaire montre qu'elle contient environ 30% en masse de baryum.

**Exemple B - Synthèse du fluoroalcoxyde de baryum Ba6L**

On ajoute 1,8 ml d'hexafluorobutanol à un mélange constitué de 1,7 g de poudre blanche issue de l'action de l'éthanol anhydre sur le baryum préparé comme à l'exemple A et de 100 ml d'un mélange 1:1 de THF anhydre et d'éthanol anhydre, sous argon à température ambiante.

La solution devient orangée et la réaction est légèrement exothermique. Peu à peu on observe la formation de particules en suspension. En laissant décanter, on obtient 3,76 g de poudre fine dont l'analyse élémentaire montre qu'elle contient environ 28% en masse de baryum.

**EXEMPLE C - Synthèse du fluoroalcoxyde de calcium Ca6R**

On met en solution sous argon 29,7 g (0,72 mol) de calcium dans 200 ml d'éthanol anhydre. La réaction est catalysée avec de l'hexaméthylsilazane et le solvant est porté à reflux. Une poudre blanche microcristalline précipite lorsque l'on refroidit le milieu, c'est pourquoi le milieu réactionnel est filtré à chaud. le filtrat est évaporé et séché sous 1.33 Pa ($10^{-2}$ mm Hg). On récupère une poudre fine dont l'analyse élémentaire montre qu'elle contient environ 30% en masse de calcium.

On introduit sous argon 11,2 g de la poudre blanche issue de la réaction de l'éthanol anhydre sur le calcium dans 100 ml de tétrahydrofuranne (THF) anhydre, puis on ajoute goutte à goutte 20 ml d'hexafluoro-2-propanol à température ambiante.

On laisse réagir le mélange pendant 4 heures sous agitation (réaction très exothermique). Le milieu réactionnel limpide est évaporé à sec et séché 12 h sous 1.33 Pa ($10^{-2}$ mm Hg). On recueille 24,5 g de poudre blanche pulvérulente dont l'analyse élémentaire montre qu'elle contient environ 10 % en masse de calcium.

**EXEMPLE D - Synthèse du fluoroalcoxyde de baryum Ba3L**

On opère selon la procédure de l'exemple A en remplaçant l'hexafluoro-2-propanol par du trifluoroéthanol. Lors de l'ajout de fluoroalcool, la réaction est légèrement exothermique. Après une journée sous agitation à température ambiante, le milieu réactionnel limpide est évaporé à sec et séché 12 h sous 1.33 Pa ($10^{-2}$ mm Hg). On obtient une poudre pulvérulente dont l'analyse élémentaire montre qu'elle contient environ 70% en masse de baryum.

**EXEMPLE E - Synthèse du fluoroalcoxyde de baryum Ba7L**

On opère selon la procédure de l'exemple A en remplaçant l'hexafluoro-2-propanol par de l'heptafluoro-4-butanol-1. Lors de l'ajout du fluoroalcool, la réaction est légèrement exothermique. On obtient, après évaporation et séchage, 3,45 g de poudre pulvérulente dont l'analyse élémentaire montre qu'elle contient environ 26% en masse de baryum.

**EXEMPLE F - Synthèse du fluoroalcoxyde de baryum Ba8L**

On opère selon la procédure de l'exemple A en remplaçant l'hexafluoro-2-propanol par de l'octafluoro pentanol-1. Lors de l'ajout du fluoroalcool, la réaction n'est pas exothermique. Le milieu réactionnel limpide est évaporé à sec et séché 12 h sous 1.33 Pa ($10^{-2}$ mm Hg). On obtient 5,75 g d'une poudre fine dont l'analyse élémentaire montre qu'elle contient 23% en masse de baryum.

**EXEMPLE G - Synthèse du fluoroalcoxyde de calcium Ca8L**

On opère selon la procédure de l'exemple C en remplaçant l'hexafluoro-2-propanol par de l'octafluoro pentanol-1. Lors de l'ajout du fluoroalcool, on observe la précipitation d'un produit blanc. Le produit est isolé par filtration puis séché sous vide 12 h sous 1.33 Pa ($10^{-2}$ mm Hg). On obtient un produit blanc pâteux dont l'analyse élémentaire montre qu'il contient environ 8% en masse de calcium.

**EXEMPLE H - Synthèse du fluoroalcoxyde de strontium Sr6R**

On introduit 9,9 g strontium (0,113 mole) dans 100 ml d'éthanol anhydre. La réaction est exothermique. Après 12 h de chauffage à l'ébullition de l'éthanol, le milieu réactionnel est filtré à chaud. Dès que le filtrat refroidit à température ambiante, un produit cristallin blanc précipite. Ce produit est isolé par filtration et séché 12 h sous 1.33 Pa ($10^{-2}$ mm Hg). On obtient 18 g d'une poudre blanche dont l'analyse élémentaire montre qu'elle contient environ 50% en masse de strontium.

Cette poudre blanche est mise en suspension dans du THF anhydre puis l'on ajoute 22,5 ml d'hexafluoroisopropanol, le milieu s'éclaircit. Le milieu réactionnel est alors évaporé à sec et séché 12 h sous 1.33 Pa ($10^{-2}$ mm Hg). On obtient une poudre jaune pulvérulente dont l'analyse élémentaire montre qu'elle contient environ 21% en masse de strontium.

EXEMPLES 1-4

Ces exemples décrivent l'obtention d'une couche hydrophobe sur support poreux.

Dans ces exemples, on dépose les divers fluoroalcoxydes sur un support poreux de cellulose ou de polyacrylonitrile. Les fluoroalcoxydes sont mis en solution à 1 g de fluoroalcoxyde dans 50 ml d'éthanol anhydre sous gaz inerte. On réalise quatre passages sur le support au moyen d'une barre en déposant à chaque fois 125 μm de solution. Entre chaque dépôt, le support poreux est laissé à l'air libre pendant 5 min.. L'hydrolyse a lieu avec l'humidité de l'air. On laisse le solvant s'évaporer. On obtient une couche hydrophobe à base d'alcalino-terreux.

Après 5 min., le support poreux est plongé dans un bécher d'eau osmosée pour éliminer les sels solubles de Ca, Ba ou Sr formés.

Pour évaluer la modification de l'état de surface, on mesure l'angle de mouillage du support poreux

- avant dépôt de la couche,
- après dépôt de la couche obtenue par le procédé décrit plus haut,
- après utilisation de la membrane dans un bain de révélateur photographique contenant des halogénures d'argent et des composés organiques utilisés pour le développement de produits radiographiques.

L'angle de mouillage θ est déterminé par la méthode de la lame de Wilhemy qui est basée sur la mesure de la force nécessaire pour arracher à un liquide une fine plaque d'un échantillon suspendue à l'un des bras d'une balance et plongeant dans ce liquide. Le liquide est maintenu à 24°C. Au préalable, la tension superficielle du liquide γ est mesurée à l'aide d'une lame de papier filtre pour laquelle θ = 0. L'angle de mouillage est défini par la formule suivante

$$\cos \theta = \Delta W / Pe.\gamma$$

où

ΔW est la variation du poids de la plaque au moment de son contact avec le liquide, et

Pe est le périmètre de la plaque.

Dans le cadre de la présente invention, une variation de l'angle de mouillage de ± 3° montre une modification de l'état de surface. Le caractère hydrophobe augmente avec la valeur de l'angle de mouillage.

La mesure de l'angle de mouillage "côté traité" montre la modification de l'état de surface de la membrane du côté où est appliquée la solution de fluoroalcoxydes.

La mesure de l'angle de mouillage "côté non-traité" montre la modification de l'état de surface de la membrane du côté opposé à celui où est appliquée la solution de fluoroalcoxydes.

La mesure de l'angle de mouillage "côté utilisé" montre la modification de l'état de surface de la membrane lorsqu'elle a été mise en contact avec le révélateur pendant plusieurs heures. Une faible diminution de l'angle de mouillage montre que la couche hydrophobe obtenue par le procédé de l'invention est stable en milieu fortement basique.

Pour déterminer les caractéristiques de séparation des molécules organiques et des sels, la membrane est mise en contact avec une solution de révélateur de formule :

| | |
|---|---|
| hydroquinone (HQ) | 21,00 g/ℓ |
| hydroquinone monosulfatée (KHQS) | 13,40 g/ℓ |
| phénidone-A | 0,69 g/ℓ |
| bromure* | 3,46 g/ℓ |
| sulfite* | 8 g/ℓ |
| pH ajusté à 9,9 | |
| eau qsp 1ℓ | |

*Le bromure et le sulfite sont sous la forme de sels de Na.

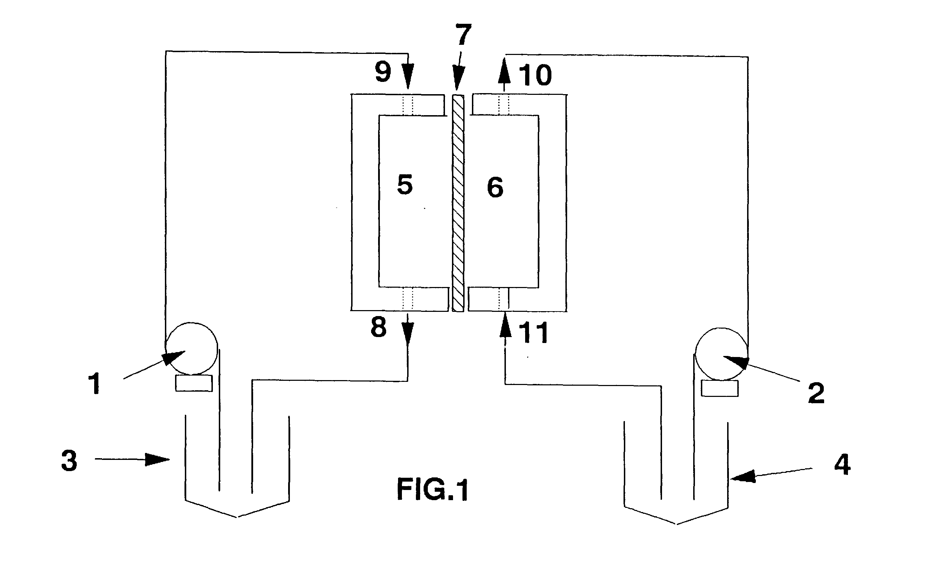

Pour tester les membranes, on utilise le montage représenté à la figure 1. Le système qui comprend la membrane se compose de deux compartiments 5) et 6) contenant environ 50 ml chacun, séparés par une membrane 7) de 10 cm$^2$, l'ensemble formant un système étanche. 500 ml de solution de révélateur contenue dans le réacteur 3) circulent dans le compartiment 5) de l'entrée 9) à la sortie 8) à l'aide d'une pompe 1) avec un débit de 25 ml/min. 180 ml d'eau contenue dans le réacteur 4) circulent à contre courant dans le compartiment 6) de l'entrée 11) à la sortie 10) à l'aide de la pompe 2) avec un débit de 25 ml/min.

**Exemple 1 - Membrane de cellulose**

Cet exemple concerne la modification de l'état de surface de membranes de cellulose régénérée Spectra/Por ayant un seuil de coupure de 6000 à 8000 daltons (diamètre de pores d'environ 2 nm) lorsqu'on les traite avec divers fluoroalcoxydes.

Tableau 1

| Fluoroalcoxyde | Angle de mouillage | |
|---|---|---|
| | Côté non traité | Côté traité |
| aucun | 34 | 38 |
| Ca6R | 75 | 73 |
| Ba6R | 54 | 117 |

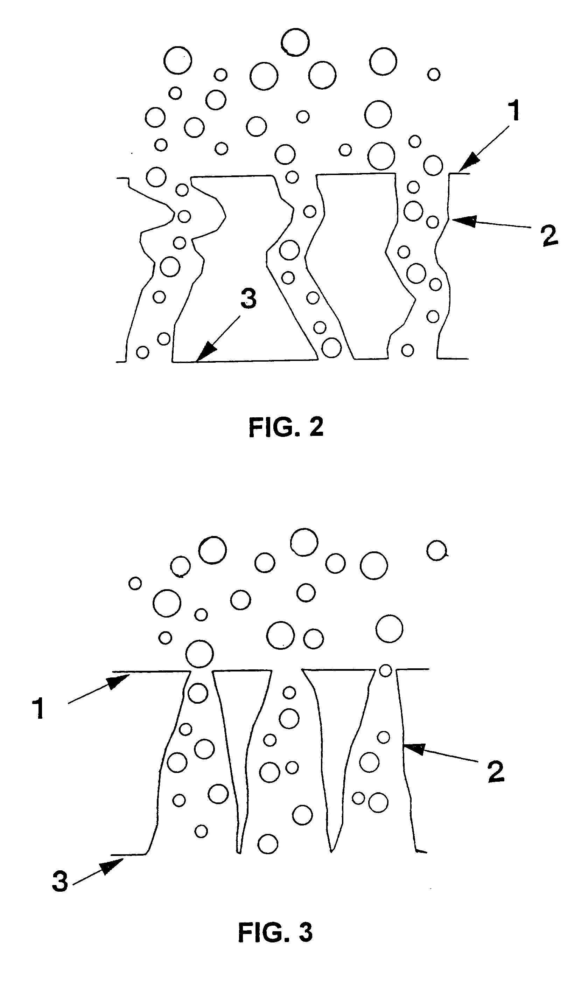

On observe une forte modification de l'hydrophobie du support de cellulose traité avec les deux fluoroalcoxydes par rapport au témoin non-traité. Le fluoroalcoxyde de baryum réagit rapidement, et la membrane traitée dans ce cas présente une forte asymétrie, comme on le voit dans la différence entre les valeurs de l'angle de mouillage des côtés traité 1) et non-traité 3) représentés à la figure 2. Avec le fluoroalcoxyde de baryum, on traite de façon préférentielle le côté 1), la surface des pores 2) et le côté 3) étant aussi traités mais à un degré moindre. Avec le fluoroalcoxyde de calcium, l'hydrolyse est plus lente et les deux côtés de la membrane 1) et 3) ainsi que la surface des pores 2) présentent la même hydrophobie.

## EP 0 746 406 B1

### Exemple 2 - Sélectivité des membranes de cellulose

Cet exemple montre l'amélioration obtenue en termes de flux et de sélectivité avec la membrane de cellulose de l'exemple précédent traitée par Ba6R.

Tableau 2

| Fluoro alcoxyde | %H$_2$O /24h | %Br/24h | % HQ+KHQS/24h | FS1 | %phénidone-A/24h | FS2 |
|---|---|---|---|---|---|---|
| aucun | 15 | 26 | 24 | 1,1 | 32 | 0,8 |
| Ba6R | 2 | 16 | 3 | 5,3 | 8 | 2,0 |

%H$_2$O/24h représente le flux d'eau, c'est-à-dire le volume d'eau transféré dans le révélateur en 24 h :

$$\%H_2O/24h = 100\ (Vf_{rev} - V\ init_{rev})/V\ init_{rev}$$

où

Vf$_{rev}$ représente le volume final du révélateur après 24 h de traitement par la membrane,
Vinit$_{rev}$ représente le volume initial du révélateur.

%Br/24h représentent le % de bromure extrait de la solution de révélateur en 24 h.
%HQ+KHQS/24h représente le % en masse d'hydroquinone et d'hydroquinone monosulfatée extraites de la solution de révélateur en 24 h.
%phénidone-A/24h représente le % de phénidone-A extraite de la solution de révélateur en 24 h.
FS1 est le facteur de sélectivité de Br par rapport à HQ+ KHQS (rapport en % extrait en 24 h).
FS2 est le facteur de sélectivité de Br par rapport à la phénidone-A (rapport en % extrait en 24 h).
Vu la faible porosité de la cellulose, les transferts ioniques sont lents, c'est pourquoi les valeurs sont données à 24 h. La quantité de bromure extrait avec la membrane traitée avec Ba6R est plus faible mais le flux d'eau est considérablement réduit et les facteurs de sélectivité nettement améliorés.

### Exemple 3

Cet exemple concerne la modification de l'état de surface de membranes de polyacrylonitrile du type IRIS A -40000D, telles que référencées dans le catalogue Prolabo 1996-1997, lorsqu'on les traite avec divers fluoroalcoxydes.

Tableau 3

| Fluoroalcoxyde | Angle de mouillage | | |
|---|---|---|---|
| | Côté non-traité | Côté traité | Côté utilisé |
| aucun | 61 | 67 | 47 |
| Ba3L | 60 | 74 | 59 |
| Ba6L | 82 | 80 | 66 |
| Ba6R | 85 | 95 | 86 |
| Sr6R | 58 | 77 | 68 |
| Ca6R | 63 | 67 | 59 |
| Ba7L | 81 | 77 | 66 |
| Ba8L | 71 | 74 | 71 |
| Ca8L | 71 | 86 | 73 |

La porosité des membranes de polyacrylonitrile étant moins régulière que celle des membranes de cellulose et la réactivité de ces membranes avec les fluoroalcoxydes étant inférieure à celle de la cellulose, les fluoroalcoxydes diffusent différemment. La membrane de polyacrylonitrile traitée par Ba6R présente une asymétrie moins prononcée

8

que la membrane de cellulose traitée par le même fluoroalcoxyde.

Quel que soit le fluoroalcoxyde, le côté traité présente une hydrophobie après utilisation supérieure à la membrane témoin, ce qui prouve que la membrane de polyacrylonitrile a été modifiée. La modification de l'angle de mouillage est maximum pour un radical alcoxo ramifié contenant 6 atomes de fluor (Ba6R).

D'après les valeurs des angles de mouillage,

1) en comparant Ba6R, Sr6R et Ca6R, on voit qu'avec le même radical alcoxo, le baryum est plus efficace que le strontium, qui lui même est plus efficace que le calcium,

2) en comparant Ba6R et Ba6L, on voit que pour le même nombre d'atomes de fluor, le radical alcoxo ramifié est plus efficace que le radical linéaire,

2) en comparant les radicaux alcoxo linéaires pour le même alcalino-terreux, on voit que si la chaîne est trop courte (Ba3L), il n'y a pas de modification de l'angle de mouillage. Si la chaîne est longue (Ba8L ou Ca8L) la réactivité du fluoroalcoxyde diminue et la modification de l'angle de mouillage est plus faible qu'avec Ba6L.

L'angle de mouillage diminue beaucoup pour la membrane témoin après utilisation. Cela montre que la membrane témoin ne peut pas être utilisée pour un traitement en continu. Par contre, pour les membranes traitées, l'angle de mouillage reste supérieur à celui de la membrane témoin avant utilisation. Cela montre que les membranes traitées sont stables en milieu alcalin et résistantes aux composés organiques.

Le caractère le plus hydrophobe est celui obtenu avec Ba6R. On observe une légère chute de la valeur de l'angle de mouillage après la mise en contact de la membrane avec la solution de révélateur pendant 2 cycles de 24 h.

Comme dans le cas de membranes de cellulose, pour le traitement avec Ca6R, on n'observe pas d'asymétrie dans le traitement des deux côtés et de plus l'hydrophobie de surface n'est pas modifiée. Cependant, la mesure de l'angle de mouillage côté utilisé montre que la membrane est plus stable que le témoin en milieu alcalin.

Il est probable que la différence de comportement entre la cellulose et le polyacrylonitrile est due au fait que les groupements hydroxyle de la cellulose favorisent la réaction d'hydrolyse in situ du fluoroalcoxyde.

**Exemple 4 - Sélectivité des membranes de polyacrylonitrile**

Cet exemple montre l'amélioration obtenue en termes de flux et de sélectivité avec les membranes de polyacrylonitrile de l'exemple précédent.

Tableau 4

| Fluoroalcoxyde | %H$_2$O/24h | %Br/6h | %Br/24h | %HQ+KHQS/6h | FS1 | %phénidone A/6h | FS2 |
|---|---|---|---|---|---|---|---|
| aucun | 36* | 17 | 25 | 20 | 0,85 | 11 | 1,5 |
| Ba3L | 36** | --- | --- | --- | --- | --- | --- |
| Ba6L | 3 | 16 | 35,8 | 5,1 | 3,13 | 12,8 | 1,2 |
| Ba6R | 18 | 22 | 34 | 7,5 | 2,93 | 12,5 | 1,8 |
| Sr6R | 3 | 20,8 | 25 | 9 | 2,31 | 10,3 | 2,0 |
| Ca6R | 14 | 40 | 28 | 4,1 | 9,75 | 12,3 | 3,2 |
| Ba7L | 43 | 28 | 30 | 4 | 7 | 13 | 2,1 |
| Ba8L | 10 | 32,8 | 37 | 3,5 | 9,37 | 13,3 | 2,5 |
| Ca8L | 2 | 29,6 | 31,4 | 12,1 | 2,44 | 16 | 1,8 |

\* pour cette expérience, après 24 h de fonctionnement toute l'eau a diffusé dans le compartiment où se trouve le révélateur, après 6 h de fonctionnement 90% de l'eau a diffusé dans ce compartiment.

\*\* pour cette expérience, toute l'eau à diffusé dans le compartiment où se trouve le révélateur après 1 h de fonctionnement. Le transport d'eau trop important n'a pas permis de faire les mesures d'extraction.

%H$_2$O/24h est tel que défini précédemment.

%Br/6h et %Br/24h représentent le % de bromure extrait de la solution de révélateur, en 6 h et 24 h respectivement.

%HQ+KHQS/6h représente le % en masse d'hydroquinone et d'hydroquinone monosulfatée extraites de la solution de révélateur en 6 h.

%phénidone-A/6h représente le % de phénidone-A extraite de la solution de révélateur en 6 h.

FS1 est le facteur de sélectivité de Br par rapport à HQ+ KHQS (rapport en % extrait en 6 h).

FS2 est le facteur de sélectivité de Br par rapport à la phénidone-A (rapport en % extrait en 6 h).

Vu la porosité élevée de la membrane de polyacrylonitrile, les transferts ioniques sont rapides ; c'est pourquoi les valeurs d'extraction et de sélectivité d'extraction sont données à 6 h.

On voit que par rapport au témoin, on obtient de meilleurs résultats en ce qui concerne le flux d'eau, le % de bromure extrait et la sélectivité avec tous les fluoroalcoxydes, sauf Ba3L.

Dans le cas de Ca6R, bien que les valeurs de l'angle de mouillage côté traité et non-traité soient très proches de celles du témoin, la comparaison des valeurs de flux et d'extraction avec celles du témoin montrent que la membrane a été considérablement modifiée par le traitement.

## Exemple 5

Cet exemple montre l'amélioration obtenue en termes de flux et de sélectivité lorsque la membrane de polyacrylonitrile est humidifiée avant l'application de fluoroalcoxyde. Pour cela, on compare les performances

- d'une membrane sèche, c'est-à-dire lavée avec un mélange d'eau et d'éthanol (1:1 en volume), séchée pendant 24 h à température ambiante, puis traitée avec Ba6R, et
- d'une membrane humidifiée, c'est-à-dire lavée avant l'étape a) du traitement avec un mélange d'eau et d'éthanol (1:1 en volume), puis traitée après 5 min. avec Ba6R.

Tableau 5

| Membrane | %H$_2$O/24h | %Br/6h | %Br/24h | %HQ+KHQS/6h | FS1 | % phénidone A/6h | FS2 |
|----------|-------------|--------|---------|-------------|-----|------------------|-----|
| sèche | 18 | 16,7 | 33,8 | 5,3 | 3,1 | 8,3 | 2,0 |
| humide | 30 | 35 | 32 | 0 | ∞ | 5,8 | 6,0 |

On voit que lorsque la membrane est humidifiée avant l'application du fluoroalcoxyde, les performances de séparation de la membrane sont très améliorées puisque les composés organiques ne sont plus transportés mais le flux de liquide transporté augmente.

## Revendications

1. Procédé pour modifier les caractéristiques de transfert d'une membrane organique ou inorganique poreuse dans lequel

   a) on applique sur une surface de ladite membrane une couche d'au moins une solution homogène obtenue en mélangeant un ou plusieurs fluoroalcoxydes de terre rare ou de métal alcalino-terreux dans un solvant organique anhydre à la température ambiante, et en atmosphère inerte, le ou les fluoroalcoxydes étant obtenus par alcoolyse d'un alcoxyde de terre are ou de métal alcalino-terreux avec un fluoroalcool ayant au moins 3 et au plus 10 atomes de fluor et un rapport fluor/carbone d'au moins 1,5 et d'au plus 2,5,
   b) on effectue l'hydrolyse du ou des fluoroalcoxydes en mettant la couche formée en (a) en contact avec une quantité d'eau égale à au moins la quantité stoechiométrique nécessaire pour hydrolyser le ou les fluoroalcoxydes et au plus à 5 fois cette quantité stoechiometrique, et,
   c) on rince à l'eau pour éliminer les sels solubles formés.

2. Procédé selon la revendication 1 dans lequel l'alcalino-terreux est choisi parmi Ba, Ca, Sr.

3. Procédé selon la revendication 2 dans lequel le fluoroalcoxyde est le produit obtenu par alcoolyse d'un alcoxyde de baryum, de strontium ou de calcium avec un fluoroalcool choisi parmi le perfluorotertiobutanol, le trifluoro-2,2,2 éthanol, l'hexafluoro-1,1,1,3,3,3 propanol-2, l'hexafluoro-2,2,3,4,4,4 butanol-1, l'heptafluoro-1,1,1,2,2,3,3 butanol-4 ou l'octafluoro-2,2,3,3,4,4,5,5 pentanol-1.

4. Procédé selon la revendication 1 dans lequel la membrane est une membrane polymère choisie parmi les membranes de cellulose, de polyacrylonitrile, de polysulfone, de polyéthersulfone, pouvant comporter des groupements fonctionnalisés introduisant une charge positive ou négative.

**5.** Procédé selon la revendication 1 dans lequel le solvant organique est choisi parmi le tétrahydrofuranne, les alcools ou les cétones.

**6.** Procédé selon la revendication 1 dans lequel la quantité de matières solides dans la solution contenant le fluoroalcoxyde est comprise entre 0,1 à 100 g/l.

**7.** Procédé selon la revendication 1 dans lequel la membrane est humidifiée avant l'étape (a).

**8.** Utilisation de la membrane préparée selon le procédé conforme à l'une des revendications 1 à 7 pour la régénération de bains photographiques, ou la séparation de composés organiques d'effluents aqueux.

**9.** Utilisation selon la revendication 8 pour la régénération de révélateurs en noir et blanc.

**Patentansprüche**

**1.** Verfahren zur Modifizierung der Übertragungs-Charakteristika einer porösen, organischen oder anorganischen Membran, bei dem:

   a) eine Schicht aus mindestens einer homogenen Lösung, erhalten durch Vermischen von einem oder mehreren Fluoroalkoxiden der Seltenen Erden oder Erdalkalimetalle, in einem wasserfreien, organischen Lösungsmittel bei Umgebungs-Temperatur und unter einer inerten Atmosphäre auf die Oberfläche der Membran aufgebracht wird, wobei das oder die Fluoroalkoxide erhalten werden, durch Alkoholyse eines Seltenen Erd- oder Erdalkalimetall-Fluoroalkoxides mit einem Fluoroalkohol mit mindestens drei und höchstens 10 Fluoratomen und einem Fluor-/Kohlenstoff-Verhältnis von mindestens 1,5, und höchstens 2,5,
   b) das oder die Fluoroalkoxide dadurch hydrolysiert werden, daß die gemäß a) erzeugte Schicht in Kontakt mit einer Wassermenge gebracht wird, die mindestens gleich ist der stöchiometrischen Menge, die erforderlich ist, um das oder die Fluoralkoxide zu hydrolysieren, und höchstens gleich ist der fünf-fachen stöchiometrischen Menge, und
   c) die Membran in Wasser gewaschen wird, um die so gebildeten, löslichen Salze zu entfernen.

**2.** Verfahren nach Anspruch 1, bei dem das Erdalkalimetall Barium, Calcium oder Strontium ist.

**3.** Verfahren nach Anspruch 2, bei dem das Fluoroalkoxid das Produkt ist, das erhalten wird, durch Alkoholyse eines Barium-, Strontium- oder Calciumalkoxides mit einem der folgenden Fluoroalkohole: Perfluorotertiobutanol; 2,2,2-Trifluoroethanol; 1,1,1,3,3,3-Hexafluoro-2-propanol; 2,2,3,4,4,4-Hexafluoro-1-butanol; 1,1,1,2,2,3,3 -Heptafluoro-4-butanol oder 2,2,3,3,4,4,5,5-Octafluoro-1-pentanol.

**4.** Verfahren nach Anspruch 1, bei dem die Membran eine Membran aus einem der folgenden Polymeren ist: Cellulose, Polyacrylnitril, Polysulfon oder Polyethersulfon, wobei das Polymer funktionelle Gruppen aufweisen kann, die eine positive oder negative Ladung einführen.

**5.** Verfahren nach Anspruch 1, bei dem das organische Lösungsmittel bestehen kann aus einem der folgenden Lösungsmittel: Tetrahydrofuran, Alkoholen oder Ketonen.

**6.** Verfahren nach Anspruch 1, bei dem die Menge an festem Material in der Lösung, enthaltend das Fluoroalkoxid, zwischen 0,1 und 100 g/l liegt.

**7.** Verfahren nach Anspruch 1, bei dem die Membran vor der Stufe a) befeuchtet wird.

**8.** Verwendung der Membran, hergestellt unter Anwendung des Verfahrens nach einem der Ansprüche 1 bis 7, für die Regeneration von fotografischen Bädern oder für die Abtrennung von organischen Verbindungen in wäßrigen Abflüssen.

**9.** Verwendung nach Anspruch 8 für die Regeneration von fotografischen Schwarz-Weiß-Entwicklern.

**Claims**

1. A process to modify the transfer characteristics of a porous organic or inorganic membrane wherein:

   a) A layer of at least one homogeneous solution obtained by mixing one or more rare earth or alkaline earth metal fluoroalkoxides in an anhydrous organic solvent is applied to the surface of said membrane at ambient temperature and under an inert atmosphere, the fluoroalkoxide(s) being obtained by alcoholysis of a rare earth or alkaline earth metal alkoxide with a fluoroalcohol containing at least three and at most 10 fluorine atoms and a fluorine/carbon ratio of at least 1.5 and at most 2.5.

   b) The fluoroalkoxide(s) is (are) hydrolyzed by placing the layer thus formed in a) in contact with an amount of water equal to at least the stoichiometric quantity necessary to hydrolyze the fluoroalkoxide(s), and at most equal to five times said stoichiometric quantity;

   c) The membrane is washed in water to eliminate the soluble salts thus formed.

2. Process according to Claim 1 wherein the alkaline earth metal is barium, calcium or strontium.

3. Process according to Claim 2 wherein the fluoroalkoxide is the product obtained by alcoholysis of a barium, strontium or calcium alkoxide with any of the following fluoroalcohols: perfluorotertiobutanol, 2,2,2-trifluoroethanol, 1,1,1,3,3,3-hexafluoro-2-propanol, 2,2,3,4,4,4-hexafluoro-1-butanol, 1,1,1,2,2,3,3-heptafluoro-4-butanol, or 2,2,3,3,4,4,5,5-octafluoro-1-pentanol.

4. Process according to Claim 1 wherein the membrane is any of the following polymer membranes: cellulose, polyacrylonitrile, polysulfone, or polyethersulfone, and can bear functional groups that introduce a positive or negative charge.

5. Process according to Claim 1 wherein the organic solvent can be any of the following: tetrahydrofuran, alcohols or ketones.

6. Process according to Claim 1 wherein the quantity of solid material in the solution containing the fluoroalkoxide is between 0.1 and 100 g/l.

7. Process according to Claim 1 wherein the membrane is wetted before step a).

8. Use of the membrane prepared using the process according to any of Claims 1 to 7 for the regeneration of photographic baths, or for the separation of organic compounds in aqueous effluents.

9. Use according to Claim 8 for the regeneration of black-and-white photographic developers.

FIG.1

**FIG. 2**

**FIG. 3**